# EUROPEAN PATENT SPECIFICATION

(11) **EP 3 786 490 B1**
(45) Date of publication and mention of the grant of the patent: **25.10.2023**
(21) Application number: 20193245.6
(22) Date of filing: 28.08.2020
(51) Int. Cl.: F16H 57/04, F16H 61/00, F16H 61/02

(54) **IMPROVED LUBRICATION SYSTEM FOR A DRIVETRAIN OF A VEHICLE**
VERBESSERTES SCHMIERSYSTEM FÜR EINEN ANTRIEBSSTRANG EINES FAHRZEUGS
SYSTÈME DE LUBRIFICATION AMÉLIORÉ POUR UNE TRANSMISSION D'UN VÉHICULE

(30) Priority: 28.08.2019 IT 201900015129
(43) Date of publication of application: 03.03.2021
(73) Proprietor: CNH Industrial Italia S.p.A., 10156 Torino (IT)
(72) Inventor: Ciarrocchi, Marco Pietro, 64027 Sant'Omero (TE) (IT); Fiorati, Stefano, 44028 Poggio Renatico (Ferrara) (IT); Hale, Nicholas, 56017 San Giuliano Terme (PI) (IT)
(74) Representative: CNH Industrial IP Department

(56) References cited:
- JP-A- 2002 147 584
- JP-A- 2007 085 397
- JP-A- 2010 126 047
- US-A1- 2018 045 295

## Description

### TECHNICAL FIELD

The present invention concerns a lubrication system for a drivetrain of a vehicle, in particular a lubrication system for a drivetrain of a work vehicle such as an agricultural vehicle.

### BACKGROUND OF THE INVENTION

Drivetrain of a vehicle needs to be continuously lubricated in order to guarantee a proper operation of the same. In particular, such need is even more felt in case of an agricultural vehicle because of the great loads transmitted through the drivetrain components.

As known, existent lubrication systems comprises a pump configured to provide oil on the drivetrain, e.g. by spraying lubricating oil on the top of the drivetrain.

The operation of such pump may be controlled depending on a plurality of different variables such as the speed of the vehicle or the operation of the engine carrying the drivetrain etc. Usually, lubrication pump is directly carried by the engine and therefore its operation strictly depends on the engine's speed.

However, it is clear that the pump will provide always a great quantity of oil to all the drivetrain components even if the critical components of the drivetrain that needs lubrication are fewer, e.g. specific gearing.

Accordingly, the power consumption of such pump is not negligible and affects the fuel consumption of the vehicle.

Therefore, the need is felt to reduce the power consumption of existing lubrication systems for drivetrains while, at the same time, guaranteeing a correct lubrication of each component of the drivetrain. JP2010126047 relates to a driving device for a hybrid car, which has high lubrication efficiency for supplying the necessary amounts of lubricant to a necessary section according to a traveling state of the vehicle. JP2002147584 relates to circulate and feed lubricating and cooling liquid to each driving unit according to the state of a plurality of drivers. US20180045295 discloses a lubricating apparatus for a vehicle, comprising a first oil pump and a second oil pump, and a first supply passage connected to a discharge side of the first oil pump on which the lubricating oil is discharged. JP2007085397 discloses a lubricating system for effectively cool and lubricate a plurality of power train apparatus while inhibiting the presence of lubricating parts.

An aim of the present invention is to satisfy the above mentioned needs in a compact, cost-effective and optimized way.

### SUMMARY OF THE INVENTION

The aforementioned aim is reached by a lubrication system as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a schematic perspective view of a lubrication system according to an embodiment of the present invention;
- Figure 2 is a schematic perspective view of a lubrication system according to an example not forming part of the present invention; and
- Figure 3 is a flow-chart illustrating a control method for the lubrication system according to the present invention.

### DETAILED DESCRIPTION OF THE INVENTION

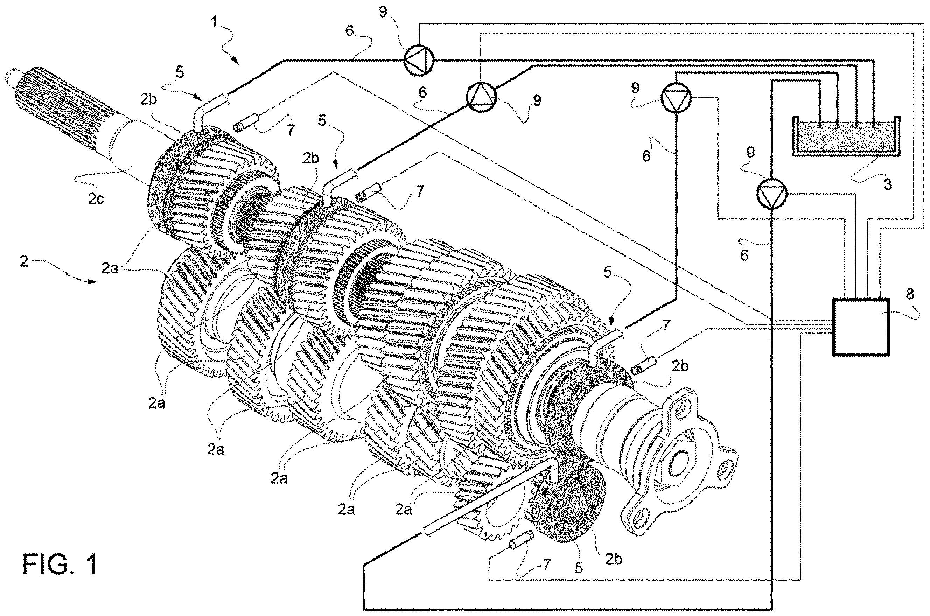

Figure 1 discloses a lubrication system 1 for a drivetrain 2 of a vehicle (not shown). The drivetrain, as known, may comprise a plurality of elements such as gears 2a, bearings 2b and shafts 2c. Since the objective of the present invention is not linked to a peculiar structure of such drivetrain 2, this latter will be not described further in detail for sake of brevity.

Lubrication system 1 further comprises an oil source 3, e.g. a reservoir configured to store a sufficient quantity of transmission oil, as known.

According to the invention, lubrication system 1 comprises a plurality of lubrication points 5 each voted to provide oil to a specific component 2a, 2b or 2c of drivetrain 2 according a predefined operative condition of drivetrain 2 and, preferably, of the vehicle.

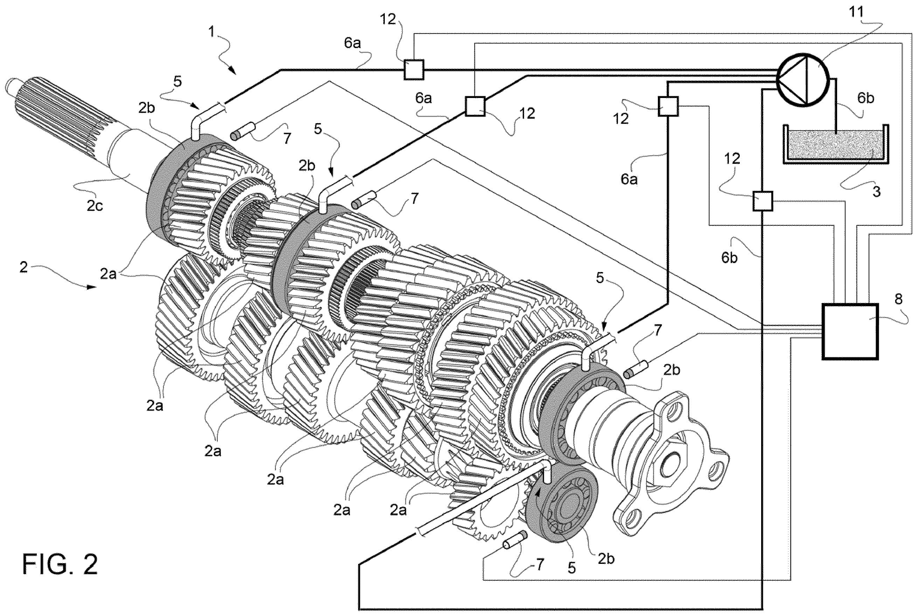

In the proposed embodiments of figures 1 and 2 the lubrication points 5 are each directed to a bearing 2b of drivetrain 2 and comprises essentially a nozzle directed to provide oil from the top of such component. However it is clear that such representation is merely schematic and different way and disposition to provide oil to components 2a, 2b or 2c of drivetrain 2 may be provided.

Each lubrication point 5 is then fluidly connected by a respective conduit 6 to oil source 3 to allow oil feeding.

Lubrication system 1 comprises a plurality of sensor means 7 configured to detect a temperature of the element which is lubricated by the lubrication point 5. Accordingly, sensor means 7 are temperature sensors and may comprise any typology of sensor, e.g. an infrared camera.

Lubrication system 1 further comprises an electronic control unit 8 that is electrically connected, e.g. via wire or electromagnetically, to each of the aforementioned sensor means 7 and it is configured to acquire the value of temperature detected by the sensors 7. Electronic control unit 8 is furthermore configured to acquire vehicle operation quantities, e.g. vehicle's velocity, engine's rpm or engine's working time e.g. via CAN-BUS connection. Preferably the aforementioned control unit 8 is the ECU of the vehicle.

According to the invention, electronic control unit 8 is configured to acquire the temperature values detected by sensor means 7 and, preferably, operational values of the vehicle and control the lubrication points 5 to selectively provide oil, when needed and to a specific point of the driveline. A proposed method of control will be described further.

In the embodiment of figure 1, lubrication system 2 comprises, for each lubrication point 5, a pump 9 fluidly interposed on the respective conduit 6 and configured to suck oil from source 3 and increase its pressure to allow its ejection from lubrication point 5 towards drivetrain 2. Each pump 9 is electrically connected to electronic control unit 8 and controlled by this latter to provide oil to the respective lubrication point 5.

In the example not forming part of the invention in figure 2, lubrication system 2 comprises a single pump 11 fluidly interposed between each lubrication point 5 and oil source 3. Accordingly, each lubrication point is fluidly connected by a conduit 6a to pump 11 and this latter is fluidly connected by a single conduit 6b to oil source 3.

According to this example not forming part of the invention, lubrication system comprises a valve 12 for each conduit 6a configured to allow or deny the passage of oil from pump 11 to the related lubrication point 5.

Advantageously, valves 12 are electrically controlled valves and each valve 12 is electrically connected to the electronic control unit 8 and controlled by this latter to provide oil to the respective lubrication point 5.

The operation of the lubrication system 1 according to the preceding described embodiment is the following.

When the temperature detected by sensor means 7 of a specific point of the drivetrain 2 overcomes a preset threshold, then electronic control unit 8 will act consequently to provide oil to only the related lubrication point 5. In particular, electronic control unit 8 will control the quantity of oil flow which needs to be imparted to such lubrication point.

In the embodiment of figure 1, electronic control unit 8 will act directly on each pump 9, thereby allowing the sucking of oil from source 3 and pumping towards the specific lubrication point/s 5.

In the example not forming part of the invention in figure 2, electronic control unit 8 will act on both the single pump 11 and on each valve 12, thereby allowing the sucking of oil from source 3 and pumping towards the specific lubrication point/s 5.

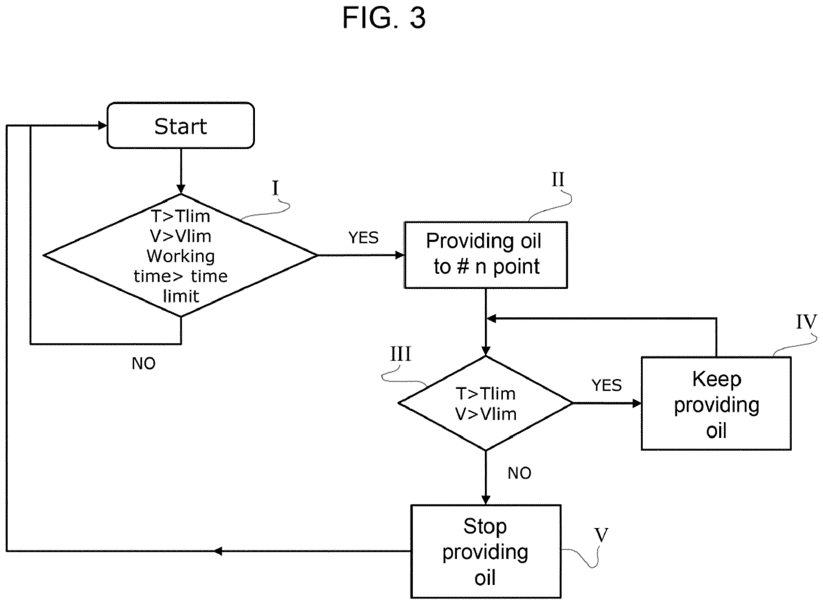

A method will be described referring to the schematic shown in figure 3; therefore the method comprises essentially the following phases:
- Verifying (I) that a preset operative condition based on a temperature of a point of the drivetrain 2 is reached;
- If such preset operative condition is reached, then providing (II) oil to the lubrication point/s 5;
- Verifying (III) that the preset operative condition is maintained;
- If such present operative condition is maintained, then keep providing (IV) oil to the to the lubrication point/s 5 and coming back to point (III); and
- Otherwise, if such present operative condition is not maintained, then stop providing (V) oil to the to the lubrication point/s 5 and coming back to point (I).

The preset operative condition of the vehicle comprises at least the control that the temperature of a point of the drivetrain is greater than a preset threshold temperature.

Preferably, the preset operative condition of the vehicle comprises also the control that velocity of the engine is greater than a preset threshold velocity.

More preferably, the preset operative condition of the vehicle comprises also the control that engine is in operation for a time greater than a preset threshold time.

Obviously, the phase of providing oil may be actuated in different ways according to the embodiment of lubrication point 5 and related hydraulic circuit keeping oil from source 3 towards this latter.

The electronic control unit 9 advantageously comprises elaboration means configured to elaborate the phases of the above disclosed method.

In view of the foregoing, the advantages of a lubrication system 1 according to the invention are apparent.

Thanks to the proposed lubrication system, it is possible to avoid a continuous use of a big pump to provide oil to the entire driveline 2. Indeed, in the exemplarily described embodiment, oil is given to driveline 2 only when and where needed. Accordingly, power is saved and vehicle's consumption is reduced.

Furthermore, the use of thermic sensors means 7 on specific dangerous points allows monitoring continuously such points, thereby improving the lifetime of the driveline 2.

Furthermore, since oil is pumped directly on such points, their temperature is constantly maintained in a safe working range, thereby improving oil quality over time.

The use of electronic pumps 9 allows to quick and easily control the operation of the system 1 and to design it according to the specific use of the vehicle. Indeed, even though temperature of specific points of the driveline 2 will be a constant present monitored value, other parameters of work vehicle operation may be included.

The proposed lubrication system is furthermore compact and save the use of great oil quantity, thereby further reducing vehicle's consumption.

It is clear that modifications can be made to the described lubrication system 1 that do not extend beyond the scope of protection defined by the claims.

For example, it is clear that the lubrication points 5 may be varied according to the dimensions and typology of point to be lubricated.

Obviously, other typology of temperature sensor means may be used instead of the described one.

Again, other quantities related to different working operations of the driveline 2 or of the vehicle may be used in combination or substitution of the described one by the electronic control unit 8 as predefined operative condition.

## Claims

1. Lubrication system (1) for lubricating a drivetrain (2) of a work vehicle said system (1) comprising a plurality of lubrication points (5) each fluidly connectable to a source (3) of oil of said vehicle and configured to provide oil to a specific point of said drivetrain (2) and sensor means (7) configured to detect a temperature value of said specific point, said system (1) further comprises an electronic control unit (8) electrically connected to said sensor means (7) and configured to acquire the temperature value detected by said sensor means, said electronic control unit (8) being further configured to allow the passage of oil from said source (3) to said lubrication points (5) according to a predefined condition based on said acquired temperature value, **characterised in that** said lubrication system (1) further comprising a pump (9) for each of said lubrication points (5), said pumps (9) being interposed between the respective lubrication point (5) and the source (3) of oil and being configured to suck oil from said source (3) and pumping it to said lubrication point (5) under control of said electronic control unit (8).

2. Lubrication system according to claim 1, wherein said specific point is on a single element (2a, 2b, 2c) of said drivetrain (2).

3. Lubrication system according to claim 1 or 2, wherein said sensor means (7) comprises an infrared camera.

4. -Lubrication system according to claim 1, wherein said pumps (9, 11) are electrical pumps connected and controlled by said control unit (8).

5. -Lubrication system according to any of the preceding claims, wherein said predefined operative condition comprises the fact that the acquired temperature by said sensor means (7) is greater than a preset threshold temperature memorized by said electronic control unit.

6. Lubrication system according to claim 5, wherein said preset operative condition of the vehicle comprises controlling that the velocity of the engine of said vehicle is greater than a preset threshold velocity.

7. Lubrication system according to claim 5 or 6, wherein said preset operative condition of the vehicle comprises controlling that the engine of said vehicle is in operation for a time greater than a preset threshold time.

## Patentansprüche

1. Schmiersystem (1) zum Schmieren eines Antriebstrangs (2) eines Nutzfahrzeugs, wobei das System (1) eine Mehrzahl von Schmierpunkten (5) umfasst, die jeweils fluidisch mit einer Ölquelle (3) des Fahrzeugs verbindbar sind und dazu eingerichtet sind, Öl an einem bestimmten Punkt des Antriebsstrangs (2) bereitzustellen, und Sensoreinrichtungen (7) umfasst, die dazu eingerichtet sind, einen Temperaturwert des bestimmten Punkts zu ermitteln, wobei das System (1) des Weiteren eine elektronische Steuereinrichtung (8) umfasst, die elektrisch mit den Sensoreinrichtungen (7) verbunden ist und dazu eingerichtet ist, Temperaturwerte zu erfassen, die von den Sensoreinrichtungen ermittelt werden, wobei die elektronische Steuereinrichtung (8) des Weiteren dazu eingerichtet ist, den Durchgang von Öl von der Quelle (3) zu den Schmierpunkten (5) entsprechend einer vordefinierten Bedingung basierend auf dem erfassten Temperaturwert zu ermöglichen,
**dadurch gekennzeichnet, dass**
das Schmiersystem (1) des Weiteren eine Pumpe (9) für jeden der Schmierpunkte (5) umfasst, wobei die Pumpen (9) zwischen dem jeweiligen Schmierpunkt (5) und der Ölquelle (3) angeordnet sind und dazu eingerichtet sind, Öl von der Quelle (3) anzusaugen und unter Steuerung der elektronischen Steuereinrichtung (8) zu dem Schmierpunkt (5) zu pumpen.

2. Schmiersystem nach Anspruch 1, wobei sich der bestimmte Punkt an einem einzelnen Element (2a, 2b, 2c) des Antriebsstrangs (2) befindet.

3. Schmiersystem nach Anspruch 1 oder 2, wobei die Sensoreinrichtungen (7) eine Infrarotkamera umfassen.

4. Schmiersystem nach Anspruch 1, wobei die Pumpen (9, 11) elektrische Pumpen sind, die mit der Steuereinrichtung (8) verbunden sind und von dieser gesteuert werden.

5. Schmiersystem nach einem der vorhergehenden Ansprüche, wobei die vordefinierte Betriebsbedingung die Tatsache umfasst, dass die von den Sensoreinrichtungen (7) erfasste Temperatur größer ist als eine voreingestellte Grenzwerttemperatur, die von der elektronischen Steuereinrichtung gespeichert ist.

6. Schmiersystem nach Anspruch 5, wobei die voreingestellte Betriebsbedingung des Fahrzeugs die Steuerung umfasst, dass die Geschwindigkeit des Motors des Fahrzeugs größer ist als eine voreingestellte Grenzwertgeschwindigkeit.

7. Schmiersystem nach Anspruch 5 oder 6, wobei die voreingestellte Betriebsbedingung des Fahrzeugs die Steuerung umfasst, dass der Motor des Fahrzeugs für eine längere Zeit in Betrieb ist als eine voreingestellte Grenzwertzeit.

## Revendications

1. - Système de lubrification (1) pour lubrifier une transmission (2) d'un véhicule de travail, ledit système (1) comprenant une pluralité de points de lubrification (5), chacun étant relié fluidiquement à une source (3) d'huile dudit véhicule et configuré pour fournir de l'huile à un point spécifique de ladite transmission (2), et des moyens de détection (7) configurés pour détecter une valeur de température dudit point spécifique, ledit système (1) comprenant en outre une unité de commande électronique (8) connectée électriquement aux moyens de détection (7) et configurée pour acquérir la valeur de température détectée par lesdits moyens de détection, ladite unité de commande électronique (8) étant en outre configurée pour permettre le passage de l'huile de ladite source (3) vers lesdits points de lubrification (5) selon une condition prédéfinie basée sur ladite valeur de température acquise, **caractérisé en ce que** ledit système de lubrification (1) comprend en outre une pompe (9) pour chacun desdits points de lubrification (5), lesdites pompes (9) étant interposées entre le point de lubrification respectif (5) et la source (3) d'huile et étant configurées pour aspirer l'huile de ladite source (3) et la pomper vers ledit point de lubrification (5) sous le contrôle de ladite unité de commande électronique (8).

2. - Système de lubrification selon la revendication 1, dans lequel ledit point spécifique se trouve sur un seul élément (2a, 2b, 2c) de ladite transmission (2).

3. - Système de lubrification selon la revendication 1 ou 2, dans lequel lesdits moyens de détection (7) comprennent une caméra infrarouge.

4. - Système de lubrification selon la revendication 1, dans lequel lesdites pompes (9, 11) sont des pompes électriques connectées et contrôlées par ladite unité de commande (8).

5. - Système de lubrification selon l'une quelconque des revendications précédentes, dans lequel ladite condition opérationnelle prédéfinie comprend le fait que la température acquise par lesdits moyens de détection (7) est supérieure à une température seuil prédéfinie mémorisée par ladite unité de commande électronique.

6. - Système de lubrification selon la revendication 5, dans lequel la condition opérationnelle prédéfinie du véhicule consiste à contrôler que la vitesse du moteur dudit véhicule est supérieure à une vitesse seuil prédéfinie.

7. - Système de lubrification selon la revendication 5 ou 6, dans lequel la condition opérationnelle prédéfinie du véhicule contrôle que le moteur dudit véhicule est en marche pendant une durée supérieure à un seuil prédéfini.
